# EUROPEAN PATENT SPECIFICATION

(11) **EP 0 968 468 B1**
(45) Date of publication and mention of the grant of the patent: **26.02.2003**
(21) Application number: 97921753.6
(22) Date of filing: 25.04.1997
(51) Int. Cl.: G06F 12/02

(54) **COMPUTER MEMORY ORGANIZATION AND METHOD THEREFOR**
SPEICHERORGANISATION EINES RECHNERS UND VERFAHREN DAFÜR
ORGANISATION D'UNE MEMOIRE INFORMATIQUE ET METHODE CORRESPONDANTE

(30) Priority: 21.03.1997 EP 97400650
(43) Date of publication of application: 05.01.2000
(73) Proprietor: Canal+ Technologies, 75015 Paris (FR)
(72) Inventor: SARFATI, Jean-Claude, F-93800 Epinay sur Seine (FR); DECLERCK, Christophe, F-28210 Senantes (FR)
(74) Representative: Cozens, Paul Dennis
(86) International application number: EP9702112
(87) International publication number: WO98043248

(56) References cited:
- EP-A- 0 477 503
- EP-A- 0 615 184
- WO-A-96/19809
- GB-A- 2 251 324
- US-A- 3 596 257
- US-A- 5 515 333
- ANONYMOUS: "Dynamic Quickcell. November 1973." IBM TECHNICAL DISCLOSURE BULLETIN, vol. 16, no. 6, November 1973, NEW YORK, US, pages 1999-2004, XP002048172
- "MANAGING VIRTUAL STORAGE USING BIT MAPS" IBM TECHNICAL DISCLOSURE BULLETIN, vol. 33, no. 3A, 1 August 1990, page 475/476 XP000120557
- ENGELKAMP H: "HARD- UND SOFTWARE DER SET-TOP-BOXEN" RADIO FERNSEHEN ELEKTRONIK, vol. 45, no. 8, August 1996, pages 20-23, XP000623888
- WU M ET AL: "ENVY: A NON-VOLATILE, MAIN MEMORY STORAGE SYSTEM" ACM SIGPLAN NOTICES, vol. 29, no. 11, 1 November 1994, pages 86-97, XP000491727

## Description

The present invention relates to computer memories, and more specifically to the division of memory areas therein and/or to the updating of the contents of flash memory. It finds particular application in a receiver/decoder of a broadcast and reception system, in particular a receiver/decoder of a digital interactive satellite television and/or radio system. However, it will be realized that it is not limited to that system or systems of that type, but is applicable more generally to a wide variety of computer systems.

In computer systems, particularly systems where the computer system is incorporated in some larger system such as a receiver/decoder for digital television or radio, the amount of memory is often limited. This means that the memory must be organized so that the use of memory space by the various functions required by the system is minimized. In addition, it may also be necessary to minimize the time required to access at least some parts of the memory.

A variety of types of computer memory are now available. One major distinction between different kinds of memory is between volatile and non-volatile memories. Volatile memory retains its contents only while power is supplied to the memory, losing its contents as soon as its power supply goes off, while non-volatile memory retains its contents indefinitely even if its power supply goes off. The other major distinction is between writable memory and read-only memory.

Volatile memory is generally known as RAM, while there are various kinds of non-volatile memory. RAM is normally writable, while read-only memory is known as ROM. This latter distinction is not necessarily hard-and-fast. Any memory must of course be writable in some sense at least once, but some kinds of ROM-like memory can have their contents changed, albeit with some difficulty. Thus there are memory types such as PROM (programmable (ie writable) read-only memory, EEPROM (electrically erasable programmable read-only memory), and Flash.

The different kinds of memory have different characteristics (eg different read times and different costs), so it is often desirable to use a combination of several different kinds in a single computer system.

The present invention is concerned with flash memory. A flash memory is generally ROM-like, in that it is non-volatile. It is also intended to be used in a generally ROM-like manner, being read from but not written to. However, flash memory can be written to, but only with some difficulty. Specifically, a flash memory is normally divided into pages, typically each of many kilobytes in length, and writing to the flash memory is by page. In more detail, to write to the flash memory, an entire page has to be erased and the new contents then have to be written into the erased page; further, this writing has to be essentially a single uninterruptible operation. (Obviously there can be a gap between the erasing and the writing.)

In principle, the information in the flash memory may be organized into units of any size from a single word upwards. In practice, however, it will normally be organized into blocks of substantial size. A block may comprise data, eg tables of permanent or semi-permanent information, or a program or sub-routine. The block sizes will normally be chosen to be less than the page size (if a block is larger than a page, it will usually be feasible to split it into sub-blocks which are less than the page size).

Typically, when a flash memory is updated it is desirable to retain some of the information already in it. This therefore requires the page being updated to be read into RAM to form an image of the page; this image in RAM can then be updated by inserting whatever new information is to be entered into the page. At the same time, any information in the page which is not longer required can be deleted. The updated image can then be written back into the flash memory.

Wu, M. et al "eNVy: A Non-Volatile, Main Memory Storage System" ACM SIGPLAN NOTICES, vol.29, no. 11, 1 November 1994, pages 86-97, XP000491727 describes a memory system including a large array of flash memory and a small array of battery-backed SRAM. The flash array is divided into a number of pages. When a write to a particular address in the flash array is requested, a copy of the corresponding page is made in the SRAM. The write request is then executed on the SRAM copy. A page mapping table is updated to point to the modified page in the SRAM.

US 5,515,333 describes a semiconductor memory including a flash EEPROM and a high speed RAM or write cache. When a write request is received, data is written from the flash EEPROM to the cache where the writing is completed. When the processing apparatus does not access the semiconductor memory, the data written in the cache memory is written into a rewriting area in the flash memory. A bit map table is arranged to store a flag for each block of flash memory, the flag being set when the block of data has been rewritten a given number of times. When the flag has been set, further re-writing of that block is prohibited.

EP 0,615,184 describes a flash memory comprising a plurality of sectors. Eight sectors constitute a block, and eight blocks constitute a cluster. A sector positioned at the top of each cluster is assigned as a cluster information sector (CIS) to store management information, such as cluster erase counts and a bad sector map. A controller creates a cluster information copy sector in RAM before erasing the cluster, and reconstructs the information when initializing a cluster.

EP 0,477,503 describes a memory section comprising a plurality of EEPROM chips. When data is to be overwritten in a memory chip, a spare memory chip is accessed to copy data stored in storage locations at all of the address locations of the chip, except for the addresses where overwriting is expected to occur. As a result, the spare memory holds data, and the chip whose memory has been copied is erased to allow data to be written in the specified addresses.

GB 2,251,324 describes a directory system for a flash EEPROM array. A file clean-up system is used to free unused space for subsequent writing operations. The clean-up involves moving all of the files from blocks of the array which will be eventually erased. The files may be written to a RAM buffer before being written in a new location in the array.

In general, the block size will not be fixed; that is, different blocks will be different sizes. This can obviously cause difficulty when some existing blocks are to be discarded and fresh blocks are to be added. These difficulties can largely be overcome by allowing the blocks to the movable, so that when a page is updated, the blocks to be retained in the page are rearranged so that any unused areas on the page are merged into a single large unused area.

If the blocks are movable, then they cannot be addressed by fixed addresses. Instead, some sort of block locating or addressing data structure must be maintained so that the blocks can in effect be searched for by using some kind of name or descriptor. With blocks of different sizes, this requires information about both the locations and the nature of the blocks. This can be achieved in various ways. Thus a detailed directory of the blocks (their locations and nature) can be maintained at the beginning of the flash memory, or a location directory of the blocks can be maintained at the beginning of the flash memory and each block can include a header giving the nature of the block. Alternatively, a separate block locating data structure can be maintained for each page of the flash memory.

All these block locating data structures have the common characteristic that updating of the flash memory is required for every change in its contents. To write a fresh block obviously requires flash memory updating; deletion of a block similarly requires updating. Although it is not necessary to physically delete the block, the block locating data structure has to be updated to indicate that the block is no longer valid.

We have realized that the need for flash memory updating can be restricted to the addition of fresh blocks; in other words, blocks can effectively be deleted without requiring updating of the flash memory. To achieve this, the block locating data structure is held at least partially in an external memory outside the flash memory itself, preferably in an EEPROM memory.

The external memory may hold the substantially the entire block locating data structure, ie the block addresses and descriptors. Alternatively, the external memory may hold only the locations of the blocks in the flash memory, with the descriptors of the blocks being included in the flash memory as headers of the blocks themselves. In both cases, the external directory may be organized either as a single structure for the entire flash memory or on a per page basis.

However, it is preferred to minimize the size of the external memory by maintaining in it only the validity of each block, with the block addresses and descriptors being maintained in the flash memory itself. This reduces the external memory to a bitmap of the validity of the blocks. To erase a block in the flash memory, all that is required is to change the bit for that block in the external memory from "valid" to "invalid".

Returning to the general page updating procedure discussed above, this procedure has a problem. If the power supply to the system should be interrupted during this procedure (or some other major system interrupt or crash should occur), the contents of the RAM will be lost, so the updated image of the page being written into the flash memory will be lost. The information previously in the flash memory page being updated will have been erased, as a preliminary to the writing of the updated page back into the flash memory. (And the updated page will have been written back into the flash memory only partially, so some of its contents will have been lost; and, since the precise point at which the power loss occurred will generally not be known, it will not normally be known exactly how much of the contents of the updated page have been written into the flash memory.)

One object of the present invention is to alleviate or overcome this problem.

In one aspect the present invention provides a memory system in a computer, comprising flash memory which is divided into separately writable pages, RAM memory, and means for copying a page of the flash memory as an image page into the RAM memory and updating the image page, characterised by further comprising separate non-volatile memory for holding a main record table identifying valid pages and at least one spare page in the flash memory, wherein a valid page of the flash memory contains valid information and a spare page contains no valid information, means for writing the updated image page back into the flash memory into a spare page as identified by the main record table, and means for updating the main record table in the non-volatile memory so as to identify said page which was copied into the RAM memory as a spare page when the updated image page has been written back into the flash memory.

In a further aspect the present invention provides a method as defined in claim 9.

The memory holding the main record table is preferably EEPROM memory. Access to the flash memory will normally be via the main record table.

In normal operation, the main record table will record some pages of the flash memory as valid and others as invalid, "invalid" meaning that the page does not contain valid information. A page can be invalid in various ways; thus it may be empty, it may have been successfully copied into another page, or it may have had its writing interrupted.

In the present system, updating a page involves copying the page being updated from its existing page in the flash memory to another page (with the copying involving updating of the contents of the page). So the present system must always maintain at least one page as invalid; the invalid page or pages can equally well be described as "spare". When a page is updated, the main record table is updated only after the copying of the page is completed. Thus if the copying of a page is interrupted, the main record table will remain unchanged, so the original page will remain valid and the new page will remain marked as spare. The copying can either be re-tried later or abandoned.

Even with the system just described, there is a potential difficulty. The system as so far described relies on the updating of the main record table. It is therefore important to ensure that the integrity of this main record table is high.

Since the updating of the main record table will be very rapid compared to the updating of a page of the flash memory, it may be possible to check the state of the power supply immediately before updating the main record table, using a power supply which has sufficient capacity to maintain the system operating for at least as long as is required to update the main record table. Preferably, however, the main record table includes an error detection section and is itself copied into a back-up record table immediately after it has been updated. The system will then include means for checking the main record table for error when using it to access the flash memory, and for using the back-up record table if the main record table has an error. Thus if the main record table has an error, the system treats the last updating of the flash memory as invalid, just as if the updating had been interrupted.

It is of course possible for the copying of the main record table into the back-up record table to be interrupted. This copying occurs only after the main updating of the main record table has been completed, however. Any later access of the flash memory will involve the checking of the main record table; that main record table will be error-free, so the back-up record table will not need to be accessed and its faulty state will be irrelevant.

During the next updating of the flash memory, however, the main record table will be updated. This updating may be interrupted, as discussed above, and if it is, then the back-up record table has to be used to access the flash memory as it was before the updating. It is therefore undesirable to allow the back-up record table to be faulty. This can conveniently be achieved by copying the main record table into the back-up record table as the first step in updating the flash memory (or at least before the writing of the updated image page from the RAM into the spare page of the flash memory).

It follows from the above discussion that the information or data blocks in the flash memory are not located in fixed positions. As the flash memory pages are updated, so the data blocks in them move from page to page, and may also have their positions in the page changed. Some form of directory is therefore required, so that the data blocks can be found when required. This directory information can be held in the record table or in the flash memory pages themselves, or divided between those two locations.

We have realized that in general the directory information does not normally change unless the data blocks themselves are changed, so it is therefore convenient to store it in the flash memory along with the data blocks. However, there is one element of directory-type information which may change without the data itself changing; that is, whether or not a data block is valid. It is therefore convenient to store data block validity information in the record table. This allows a data block to be effectively deleted without having to update the flash memory; all that need be done is to change the block's indicator from valid to invalid.

Of course, if the page with that block is updated at some later time, the blocks with invalid indicators will not be copied from the page into the image page in RAM memory, so they will be deleted in a more physical sense at that point. (They will actually remain in the old page, which becomes the new spare page, but are of course inaccessible there, and when that new spare page is used for the next updating of the flash memory, their physical deletion will be complete.)

The record table therefore preferably contains, for each page, a set of data block validity indicators, which may conveniently be in the form of single bits. This increases the size of the record table, which in turn means that a variety of standard techniques can be used to provide the error detection section; it is preferred to use a cyclic redundancy check (CRC), though an error detecting or correcting code or a hash-type function could be used.

The block validity indicators for a page in the record table must of course be linked to the blocks themselves in that page in the flash memory. This may be done by keeping the blocks in the page in the flash memory in the same sequence as their indicators in the record table. It is preferred, however, to provide a header in each page in the flash memory which contains a set of pointers to the actual locations of the blocks in that page; this permits greater freedom in the arrangement of the blocks themselves in the page.

The identification information (eg block name) for each block in the page may be included either in the page header or as a block header at the start of the block itself. The latter option is the one adopted in the preferred embodiment. This identification information may include block linking information, so that a large unit of data can be split into 2 or more blocks.

A her aspect of the present invention provides a receiver/decoder for use in a digital broadcast and reception system including a memory system as described above.

Preferably, the receiver/decoder further comprises means for receiving a compressed MPEG-type signal, means for decoding the received signal to provide a television and/or radio signal and means for supplying the signal to a television and/or radio.

Preferred features of the present invention will now be described, purely by way of example, with reference to the accompanying drawings, in which:-
Figure 1 shows the overall architecture of a digital television system according to the preferred embodiment of the present invention;
Figure 2 shows the architecture of an interactive system of the digital television system;
Figure 3 shows the arrangement of files within a module downloaded into the memory of an interactive receiver/decoder;
Figure 4 is a simplified block diagram of the relevant parts of the computer system;
Figure 5 is a diagram of the organization of a part of the RAM memory;
Figure 8 is a block diagram of the system;
Figure 9 shows the logical layout of the flash memory and the record tables; and
Figure 10 shows the logical layout of a flash memory page and a sub-section of the record table.

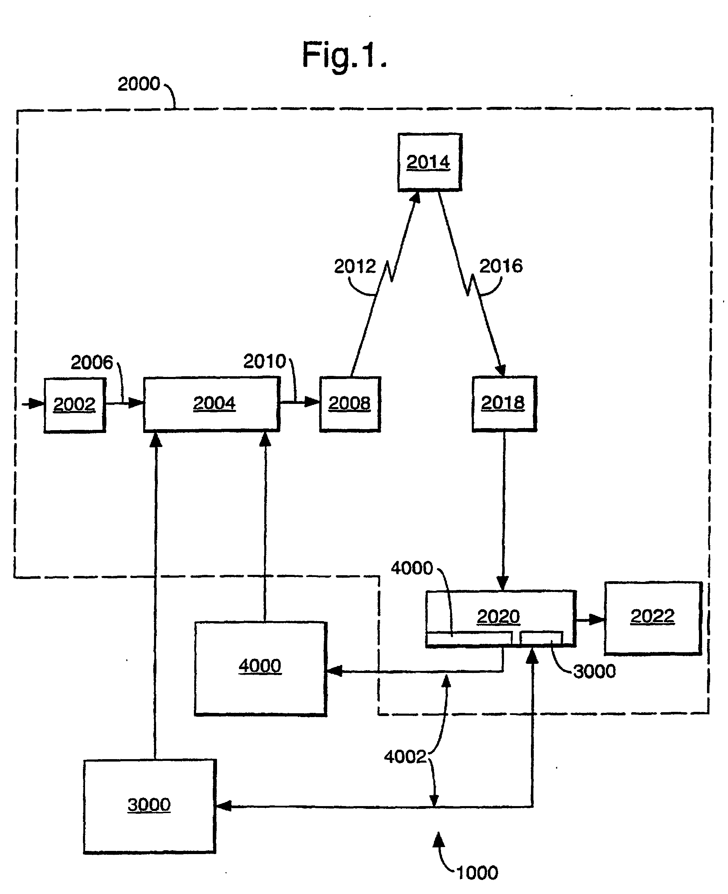

An overview of a digital television system 1000 is shown in Figure 1. The invention includes a mostly conventional digital television system 2000 which uses the known MPEG-2 compression system to transmit compressed digital signals. In more detail, MPEG-2 compressor 2002 in a broadcast centre receives a digital signal stream (typically a stream of video signals). The compressor 2002 is connected to a multiplexer and scrambler 2004 by linkage 2006. The multiplexer 2004 receives a plurality of further input signals, assembles one or more transport streams and transmits compressed digital signals to a transmitter 2008 of the broadcast centre via linkage 2010, which can of course take a wide variety of forms including telecom links. The transmitter 2008 transmits electromagnetic signals via uplink 2012 towards a satellite transponder 2014, where they are electronically processed and broadcast via notional downlink 2016 to earth receiver 2018, conventionally in the form of a dish owned or rented by the end user. The signals received by receiver 2018 are transmitted to an integrated receiver/decoder 2020 owned or rented by the end user and connected to the end user's television set 2022. The receiver/decoder 2020 decodes the compressed MPEG-2 signal into a television signal for the television set 2022.

A conditional access system 3000 is connected to the multiplexer 2004 and the receiver/decoder 2020, and is located partly in the broadcast centre and partly in the decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 2020. Using the decoder 2020 and smartcard, the end user may purchase commercial offers in either a subscription mode or a pay-per-view mode.

An interactive system 4000, also connected to the multiplexer 2004 and the receiver/decoder 2020 and again located partly in the broadcast centre and partly in the decoder, enables the end user to interact with various applications via a modemmed back channel 4002.

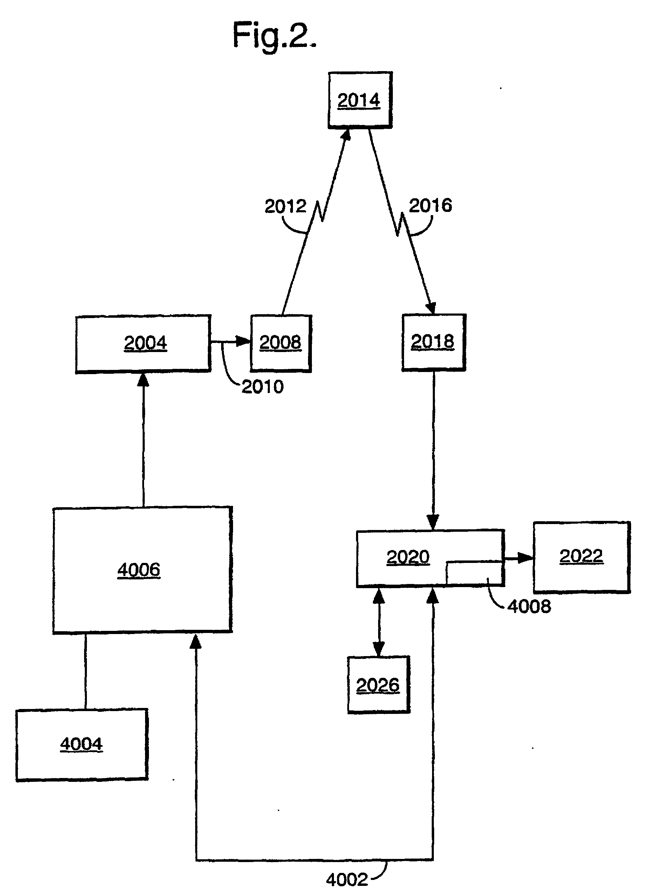

Figure 2 shows the general architecture of the interactive television system 4000 of the digital television system 1000 of the present invention.

For example, the interactive system 4000 allows an end user to buy items from on-screen catalogues, consult local news and weather maps on demand and play games through his television set.

The interactive system 4000 comprises in overview four main elements:
an authoring tool 4004 at the broadcast centre (or elsewhere) for enabling a broadcast supplier to create, develop, debug and test applications;
an application and data server 4006 the broadcast centre, connected to the authoring tool 4004 for enabling a broadcast supplier to prepare, authenticate and format applications and data for delivery to the multiplexer and scrambler 2004 for insertion into the MPEG-2 transport stream (typically the private section thereof) to be broadcast to the end user;
a virtual machine including a run time engine (RTE) 4008, which is an executable code installed in the receiver/decoder 2020 owned or rented by the end user for enabling an end user to receive, authenticate, decompress, and load applications into the working memory 2024 of the receiver/decoder 2020 for execution. The engine 4008 also runs resident, general-purpose applications. The engine 4008 is independent of the hardware and operating system; and
a modemmed back channel 4002 between the receiver/decoder 2020 and the application and data server 4006 to enable signals instructing the server 4006 to insert data and applications into the MPEG-2 transport stream at the request of the end user.

The interactive television system operates using "applications" which control the functions of the receiver/decoder and various devices contained therein. Applications are represented in the engine 4008 as "resource files". A "module" is a set of resource files and data. Several modules may be required to make up an application. A "memory volume" of the receiver/decoder is a storage space for modules. An "interface" is used to download modules. Modules may be downloaded into the receiver/decoder 2020 from the MPEG-2 transport stream.

The elements mentioned in the previous paragraph are now described in more detail.

For the purposes of this specification, an application is a piece of computer code for controlling high level functions of preferably the receiver/decoder 2020. For example, when the end user positions the focus of a remote controller on a button object seen on the screen of the television set 2022 and presses a validation key, the instruction sequence associated with the button is run.

An interactive application proposes menus and executes commands at the request of the end user and provides data related to the, purpose of the application. Applications may be either resident applications, that is, stored in the ROM (or FLASH or other non-volatile memory) of the receiver/decoder 2020, or broadcast and downloaded into the RAM or FLASH memory of the receiver/decoder 2020.

Examples of applications are:-
- An Initiating Application. The receiver/decoder 2020 is equipped with a resident initiating application which is an adaptable collection of modules (this term being defined in more detail hereunder) enabling the receiver/decoder 2020 to be immediately operative in the MPEG-2 environment. The application provides core features which can be modified by the broadcast supplier if required. It also provides an interface between the resident application and downloaded applications.
- A Startup Application. The startup application allows any application, either downloaded or resident, to run on the receiver/decoder 2020. This application acts as a bootstrap executed on arrival of a service in order to start the application. Startup is downloaded into RAM and therefore can be updated easily. It can be configured so that the interactive applications available on each channel can be selected and run, either immediately after downloading or after preloading. In the case of preloading, the application is loaded into the memory 2024 and is activated by the startup when required.
- A Program Guide. The Program Guide is an interactive application which gives full information about programming. For example, it may give information about, say, one week's television programmes provided on each channel of a digital television bouquet. By depressing a key on the remote controller 2026, the end user accesses an add-on screen, overlaid on the event shown on the screen of the television set 2022. This add-on screen is a browser giving information on the current and next events of each channel of the digital TV bouquet. By depressing another key on the remote controller 2026, the end user accesses an application which displays a list of information on events over one week. The end user can also search and sort events with simple and customised criteria. The end user can also access directly a selected channel.
- A Pay Per View application. The Pay Per View Application is an interactive service available on each PPV channel of the digital TV bouquet in conjunction with the conditional access system 3000. The end user can access the application using a TV guide or channel browser. Additionally, the application starts automatically as soon as a PPV event is detected on the PPV channel. The end user is then able to buy the current event either through his daughter smartcard 3020 or via the communication server 3022 (using a modem, a telephone and DTMF codes, MINITEL or the like). The application may be either resident in the ROM of the receiver/decoder 2020 or downloadable into the RAM of the decoder 2020.
- A PC Download application. On request, an end user can download computer software using the PC download application.
- A Magazine Browser application. The magazine browser application comprises a cyclic video broadcast of images with end user navigation via on-screen buttons.
- A Quiz application. The quiz application is preferably synchronised with a broadcast quiz programme. As an example, multiple choice questions are displayed on the screen of the television 2022, and the user can select an answer using the remote controller 2026. The quiz application can inform the user whether the answer is correct or not, and can keep count of the user's score.
- A Teleshopping application. In one example of the teleshopping application, offers of goods for sale are transmitted to the receiver/decoder 2020 and displayed on the television 2022. Using the remote controller, the user can select a particular item to buy. The order for the item is sent via the modemmed back channel 4002 to the application and data server 4006 or to a separate sales system the telephone number of which has been downloaded to the receiver/decoder, possibly with an order to debit the account for a credit card which has been inserted into one of the card readers 4036 of the receiver/decoder 2020.
- A Telebanking application. In one example of the telebanking application, the user inserts a bank card into one of the card readers 4036 of the receiver/decoder 2020. The receiver/decoder 2020 dials up the user's bank, using a telephone number stored in the bank card or stored in the receiver/decoder, and then the application provides a number of facilities which can be selected using the remote controller 2026, for example for downloading via the telephone line a statement of account, transferring funds between accounts, requesting a cheque book, etc.
- An Internet Browser application. In one example of the Internet browser application, instructions from the user, such as a request to view a web page having a particular URL, are entered using the remote controller 2026, and these are sent by the modemmed back channel 4002 to the application and data server 4006. The appropriate web page is then included in the transmissions from the broadcast centre, received by the receiver/decoder 2020 via the uplink 2012, transponder 2014 and downlink 2016, and displayed on the television 2022.

Applications are stored in memory locations in the receiver/decoder 2020 and represented as resource files. The resource files comprise graphic object description unit files, variables block unit files, instruction sequence files, application files and data files.

The graphic object description unit files describe the screens, the man-machine interface of the application. The variables block unit files describe the data structures handled by the application. The instruction sequence files describe the processing operations of the applications. The application files provide the entry points for the applications.

The applications constituted in this way can use data files, such as icon library files, image files, character font files, colour table files and ASCII text files. An interactive application can also obtain on-line data by effecting inputs and/or outputs.

The engine 4008 only loads into its memory those resource files it needs at a given time. These resource files are read from the graphic object description unit files, instruction sequence files and application files; variables block unit files are stored in memory following a call to a procedure for loading modules and remain locked there until a specific call to a procedure for unloading modules is made.

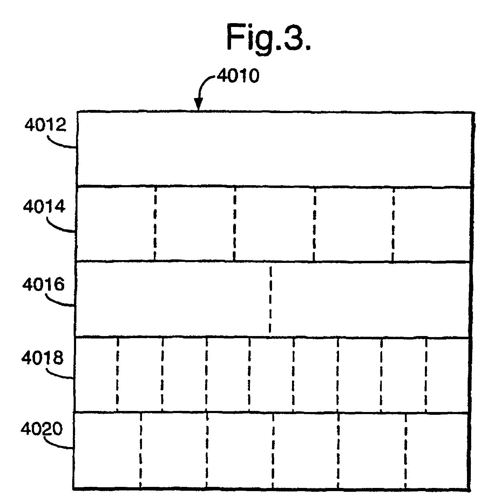

With reference to Figure 3, a module 4010, such as a tele-shopping module, is a set of resource files and data comprising the following:
a single application file 4012;
an undetermined number of graphic object description unit files 4014;
an undetermined number of variables block unit files 4016;
an undetermined number of instruction sequence files 4018; and
where appropriate, data files 4020 such as icon library files, image files, character font files, colour table files and ASCII text files.

In the MPEG data stream, each module comprises a group of MPEG tables. Each MPEG table may be formatted as a number of sections. In the MPEG data stream, each section has a "size" of up to 4 kbytes. For data transfer via the serial and parallel port, for example, modules similarly are split into tables and sections, the size of the section varying with the transport medium.

Modules are transported in the MPEG data stream in the form of data packets of typically 188 bytes within respective types of data stream, for example, video data streams, audio data streams and teletext data streams. Each packet is preceded by a Packet Identifier (PID) of 13 bits, one PID for every packet transported in the MPEG data stream. A programme map table (PMT table) contains a list of the different data streams and defines the contents of each data stream according to the respective PID. A PID may alert a device to the presence of applications in the data stream, the PID being identified using the PMT table.

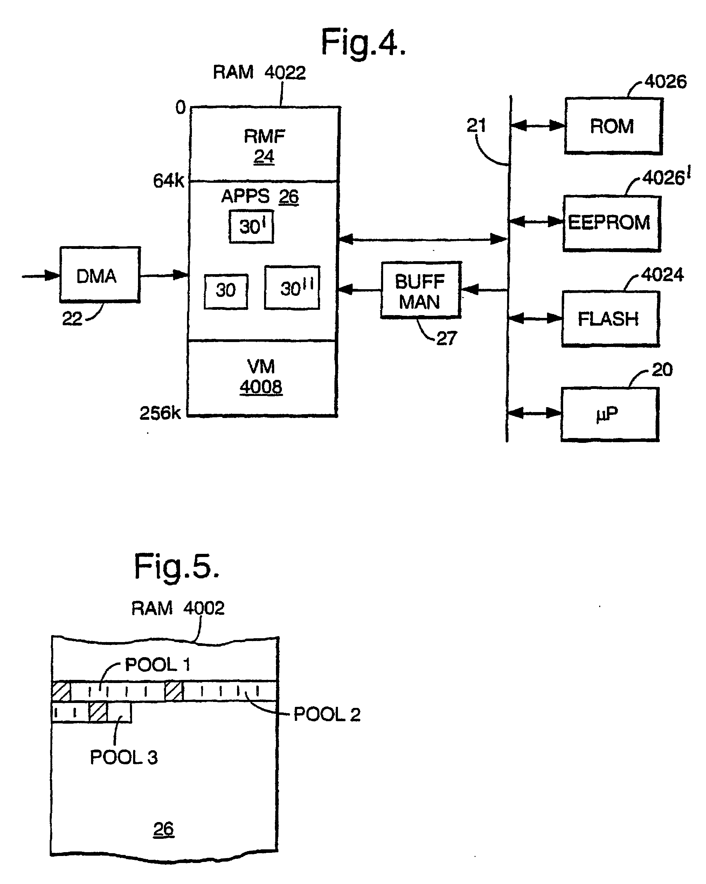

Referring to Figure 4, the receiver/decoder comprises a RAM memory 4022 coupled to a microprocessor 20 which is also coupled to a FLASH memory 4024, an EEPROM memory 4024', and a ROM memory 4026 over a bus 21. The RAM memory 4022 is also coupled to a DMA (direct memory access) unit 22 through which data (eg from an MPEG bitstream) can be entered directly into the RAM memory.

The RAM memory is 256 kbytes long, and is divided into 3 areas: an area 24 which is reserved for use by the manufacturer of the system, an area 25 which is reserved for use by a virtual machine (VM), and a user area 26 which is used to contain a variety of information such as buffers, applications 30, 30', 30", data etc. The system is defined by a functional specification allowing the manufacturer considerable freedom in designing the hardware to implement the system; the memory area 24 is used in effect as an interface between the functions specified by the functional specification and the hardware. The VM in area 25 is in effect a kind of operating system for the computer system, and the VM and the microprocessor 20 can together be regarded as a run time engine (RTE) 4008. A variety of different applications may be loaded into the memory at different times.

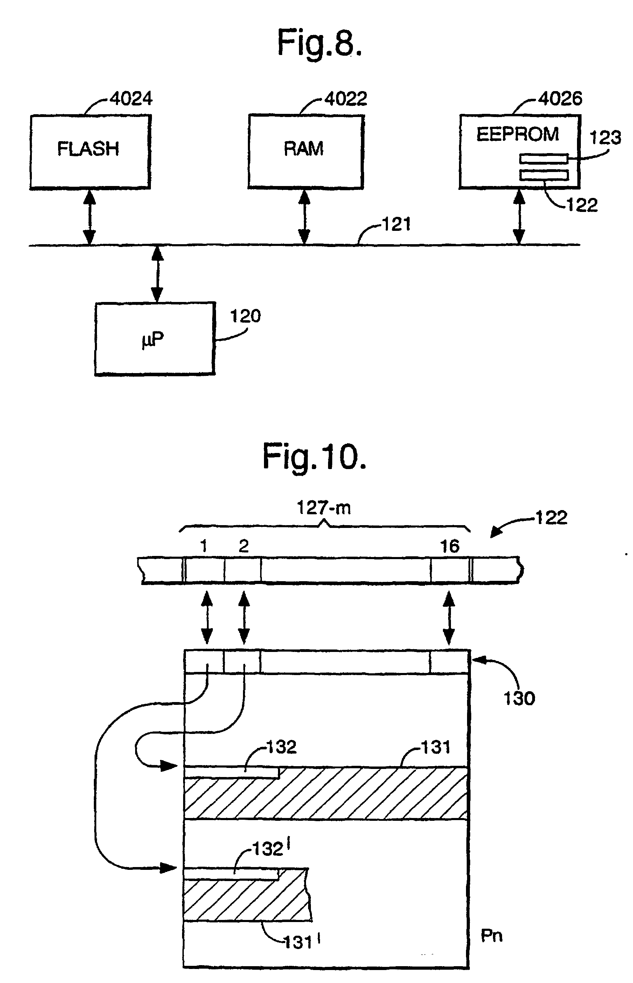

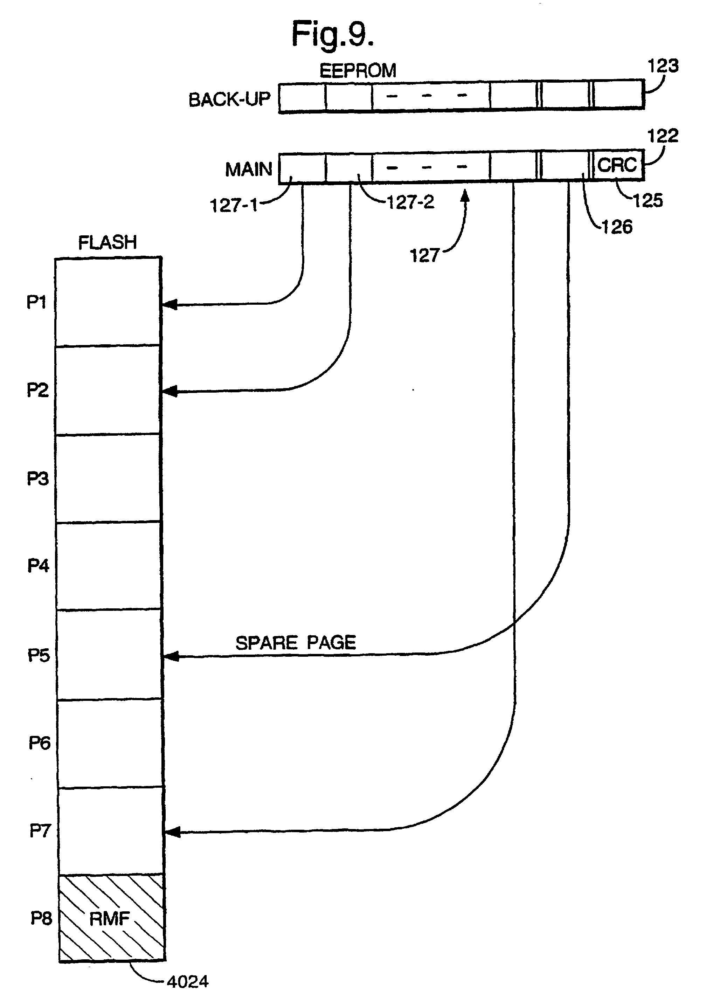

Referring to Figure 8, the system comprises a flash memory 4024, a RAM memory 4022, and an EEPROM memory 4026 all coupled to a microprocessor 120 over a bus 121. (Alternatively, the EEPROM memory may be coupled directly to the microprocessor 120.) The flash memory is divided into 8 pages P1-P8 of equal size, as shown in Figure 9. Of these pages, page P8 is reserved for the use of the manufacturer; the remaining pages are free for use by the user.

Figure 9 also shows the main record table register 122 and back-up record table register 123, which are resident in the EEPROM 4026. The information in these tables is in somewhat compressed and coded form. Specifically, the final section 125 of table 122 is a CRC byte, and the section 126 before that is a page number which identifies the spare page. The first section 127 of table 122 consists of 6 sub-sections 127-1 to 127-6, one for each of the valid pages of the flash memory (ie the 6 pages left apart from the spare page and the reserved page P8). These sub-sections correspond to these remaining pages in sequence.

Figure 10 shows the logical layout of a flash memory page Pn and a sub-section 127-m of the record table and the relationship between them. (Depending on where the spare page is, m may equal n or n-1.)

Considering first the flash memory page, this can contain a maximum of 16 blocks of data. The page has a header 130 which contains 16 sections, one for each possible data block. Each section of the header 130 contains an offset or pointer to the start of its data block; this pointer is in effect the address of the block within the page. The data blocks 131, 131', ..... in the page can therefore be in any order. Each data block contains a respective header 132, 132', ..... which can contain a variety of items relating to the block, such as the name of the block, a version number, the block length, status information, and so on.

The sub-section 127-m of the record table consists of 16 bits, each bit being a block validity indicator for the corresponding section in the page header 130 as shown.

The process of updating a page in the flash memory will now be described. All the manipulations required for page updating are performed by the microprocessor 120.

First, the main record table in register 122 is checked for validity; that is, the CRC of sections 126 and 127 is calculated and compared to the stored CRC in section 125. The main record table is then copied into the back-up record table register 123 (and, if desired, the back-up record table can then be checked for validity, to ensure that the copying was error-free).

Next, the page being updated (the old page) is copied from the flash memory into the RAM memory. The sub-section 127-m in the main record table for that page is extracted, and any data blocks marked as invalid arc deleted from the page image in the RAM memory. The new data blocks are written into the page image.

It may be that the new data blocks will not fit easily into the spaces between the remaining original data blocks. These remaining blocks will in general be separated by blank areas of various sizes. They are therefore shifted up the page image to "squeeze out" the unused areas between them, effectively moving the unused areas to the bottom of the page image to form a single large unused area. This ensures that the new data blocks can be written into the page image (provided, of course, that the page capacity is not exceeded). The block header in the page image is of course updated, by changing its pointers to the new positions of the data blocks in the page image.

The sub-section of the record table for the page being updated was previously extracted from the record table. That extracted sub-section is now updated, by setting the validity bits for any new data blocks which have been added to the page image.

Next, the whole of section 127 of the record table is extracted from the main record table register 122. The sub-section corresponding to the page being updated (the old page) is effectively deleted. This is the sub-section which was previously extracted by itself, and has been updated. This new sub-section (corresponding to the new page, ie the spare page into which the updated page is being written) is inserted into the sequence of sub-sections at the appropriate point. For this, the sub-sections for any pages between the old and new pages have to be shifted along to fill up the sub-section which has been deleted and make room for the new sub-section.

Next, the updated page image in the RAM memory is copied into the spare page, as identified by the spare page number in section 126 of the main record table.

Next, the page number in the spare page section is changed to the page number of the old page, which now becomes the new spare page.

Next, the updated record table is copied into the main record table register 122. Finally, the updated contents of the main record table register 122 are copied into the back-up record table register 123, and, if desired, the contents of the main record table in register 122 and/or the back-up record table can be checked for validity.

When the system is restarted, eg. after powering down, the two record tables may both be checked for validity; if either is found to be invalid, it can be replaced by the valid one (ie. the contents of the valid record table being copied into the invalid record table).

It will be understood that the present invention has been described above purely by way of example, and modifications of detail can be made within the scope of the invention.

Each feature disclosed in the description, and (where appropriate) the claims and drawings may be provided independently or in any appropriate combination.

In the aforementioned preferred embodiments, certain features of the present invention have been implemented using computer software. However, it will of course be clear to the skilled man that any of these features may be implemented using hardware. Furthermore, it will be readily understood that the functions performed by the hardware, the computer software, and such like are performed on or using electrical and like signals.

## Claims

1. A memory system in a computer, comprising:
flash memory (4024) which is divided into separately writable pages (P1-P8);
RAM memory (4022); and
means (120) for copying a page of the flash memory as an image page into the RAM memory and updating the image page;
**characterised by** further comprising:
separate non-volatile memory (4026) for holding a main record table (122) identifying valid pages and at least one spare page in the flash memory (4024), wherein a valid page of the flash memory contains valid information and a spare page contains no valid information;
means (120) for writing the updated image page back into the flash memory (4024) into a spare page as identified by the main record table (122); and
means (120) for updating the main record table (122) in the non-volatile memory (4026) so as to identify said page which was copied into the RAM memory (4022) as a spare page when the updated image page has been written back into the flash memory (4024).

2. A memory system according to Claim 1, wherein: the main record table (122) includes an error detection section (125); and wherein there are provided: a back-up record table (123) into which the main record table (122) is copied immediately after it has been updated; and means (120) for checking the main record table (122) for error when using it to access the flash memory (4024), and for using the back-up record table (123) if the main record table (122) has an error.

3. A memory system according to Claim 2, wherein the error detection section (125) is a CRC section.

4. A memory system according to any preceding claim, wherein each page comprises a plurality of data blocks, and wherein the record table (122) includes for each page a set of block validity indicators (127-m) for the data blocks in the corresponding page.

5. A memory system according to Claim 4, wherein identification information (132) for the blocks in a page is included in the page.

6. A memory system according to Claim 5, wherein the identification information (132) for each block is included in that block.

7. A memory system according to any preceding claim, wherein said separate non-volatile memory (4026) is EEPROM.

8. A memory system according to any preceding claim wherein the main record table (122) includes a section (126) identifying a spare page and a section (127) consisting of a sequence of sub-records each relating to a respective valid page.

9. A method of, in a memory system comprising a flash memory (4024) and a RAM memory (4022), updating the flash memory (4024) divided into separately writable pages (P1-P8) comprising the step of copying a page of the flash memory (4024) as an image page into RAM memory (4022) and updating the image page; **characterised by** further comprising the steps of:
providing a main record table (122) held in separate non-volatile memory (4026), identifying valid pages and at least one spare page in the flash memory (4024), wherein a valid page of the flash memory (4024) contains valid information and a spare page contains no valid information,
after the copying step writing the updated image page back into the flash memory (4024) into a spare page as identified by the main record table (122), and
updating the main record table (122) so as to identify said page which was copied into the RAM memory (4022) as a spare page when the updated image page has been written back into the flash memory (4024).

10. A method according to Claim 9 comprising: including an error detection section (125) in the main record table (122); providing a back-up record table (123) into which the main record table (122) is copied immediately after it has been updated; and checking the main record table (122) for error when using it to access the flash memory (4024), and using the back-up record table (123) if the main record table (122) has an error.

11. A method according to Claim 10, wherein the error detection section (125) is calculated as a CRC section.

12. A method according to Claim 10 or 11, wherein the main record table (122) is checked for validity before copying the page of the flash memory (4024) as an image page into the RAM memory (4022).

13. A method according to Claim 12, wherein the main record table (122) is copied into the back-up record table immediately after checking of the main record table (122) for validity.

14. A method according to Claim13, wherein the back-up record table is checked for validity immediately after the copying of the main record table (122) thereinto.

15. A method according to any of Claims 9 to 14 wherein each page comprises a plurality of data blocks, and, for each page, a set of block validity indicators (127-m) for the data blocks in the corresponding page is included in the main record table (122).

16. A method according to Claim 15, wherein identification information (132) for the blocks in a page is included in the page.

17. A method according to Claim 16, wherein the identification information (132) for each block is included in that block.

18. A method according to any of Claims 15 to 17, wherein the valid data blocks in the image page are rearranged to eliminate unused spaces therebetween.

19. A method according to any of Claims 9 to 18, wherein the main record table (122) is stored in an EEPROM.

20. A method according to any of Claims 9 to 19, wherein a section (126) identifying a spare page and a section (127) consisting of a sequence of sub-records each relating to a respective valid page are included in the main record table (122).

21. A receiver/decoder (2020) for use in a digital broadcast and reception system including a memory system according to any of Claims 1 to 8.

22. A receiver/decoder according to Claim 21, further comprising:
means (2018) for receiving a compressed MPEG-type signal;
means for decoding the received signal to provide a television and/or radio signal; and
means for supplying the signal to a television and/or radio.

## Patentansprüche

1. Speichersystem in einem Computer, das Folgendes umfasst:
einen Flash-Speicher (4024), der in separat beschreibbare Seiten (P1-P8) unterteilt ist;
einen RAM-Speicher (4022); und
ein Mittel (120), um eine Seite des Flash-Speichers als eine Bildseite in den RAM-Speicher zu kopieren und die Bildseite zu aktualisieren;
**dadurch gekennzeichnet, dass** es weiter Folgendes aufweist:
einen separaten, nicht flüchtigen Speicher (4026), um eine Hauptaufzeichungstabelle (122) zu halten, die gültige Seiten und wenigstens eine Reserveseite in dem Flash-Speicher (4024) identifiziert, wobei eine gültige Seite des Flash-Speichers gültige Information enthält und eine Reserveseite keine gültige Information enthält;
ein Mittel (120), um die aktualisierte Bildseite zurück in den Flash-Speicher (4024) in eine Reserveseite zu schreiben, wie sie durch die Hauptaufzeichungstabelle (122) identifiziert ist; und
ein Mittel (120), um die Hauptaufzeichungstabelle (122) in dem nicht flüchtigen Speicher (4026) zu aktualisieren, um so die Seite als eine Reserveseite zu identifizieren, die in den RAM-Speicher (4022) kopiert worden ist, wenn die aktualisierte Bildseite zurück in den Flash-Speicher (4024) geschrieben worden ist.

2. Speichersystem nach Anspruch 1, bei welchem die Hauptaufzeichungstabelle (122) einen Fehlerdetektionsabschnitt (125) enthält; und bei welchem Folgendes vorgesehen ist: eine Sicherungs-Aufzeichnungstabelle (123), in die die Hauptaufzeichnungstabelle (122) kopiert wird, unmittelbar nachdem sie aktualisiert worden ist; und ein Mittel (120), um die Hauptaufzeichnungstabelle (122) nach einem Fehler zu überprüfen, wenn sie verwendet wird, um auf den Flash-Speicher (4024) zuzugreifen, und um die Sicherungs-Aufzeichungstabelle (123) zu verwenden, falls die Hauptaufzeichungstabelle (122) einen Fehler hat.

3. Speichersystem nach Anspruch 2, bei welchem der Fehlerdetektionsabschnitt (125) ein CRC-Abschnitt ist.

4. Speichersystem nach irgendeinem vorhergehenden Anspruch, bei welchem jede Seite eine Vielzahl von Datenblöcken umfasst, und bei welchem die Aufzeichungstabelle (122) für jede Seite einen Satz von Blockgültigkeitsindikatoren (127-m) für die Datenblöcke in der entsprechenden Seite enthält.

5. Speichersystem nach Anspruch 4, bei welchem eine Identifikationsinformation (132) für die Blöcke in einer Seite in der Seite enthalten ist.

6. Speichersystem nach Anspruch 5, bei welchem die Identifikationsinformation (132) für jeden Block in jenem Block enthalten ist.

7. Speichersystem nach irgendeinem vorhergehenden Anspruch, bei welchem der separate nicht fluchtige Speicher (4026) ein EEPROM ist.

8. Speichersystem nach irgendeinem vorhergehenden Anspruch, bei welchem die Hauptaufzeichungstabelle (122) einen Abschnitt (126), der eine Reserveseite identifiziert, und einen Abschnitt (127), der aus einer Sequenz von Unteraufzeichnungen besteht, die sich jeweils auf eine jeweilige gültige Seite beziehen, enthält.

9. Verfahren in einem Speichersystem, das einen Flash-Speicher (4024) und einen RAM-Speicher (4022) umfasst, zum Aktualisieren des Flash-Speichers (4024), der in separat beschreibbare Seiten (P1-P8) unterteilt ist, und das den Schritt umfasst, wonach eine Seite des Flash-Speichers (4024) als eine Bildseite in einen RAM-Speicher (4022) kopiert wird und die Bildseite aktualisiert wird; **dadurch gekennzeichnet, dass** es weiter die folgenden Schritte umfasst: eine Hauptaufzeichnungstabelle (122), die in einem separaten nicht flüchtigen Speicher (4026) gehalten wird, wird bereitgestellt; gültige Seiten und wenigstens eine Rerserveseite in dem Flash-Speicher (4024) werden identifiziert, wobei eine gültige Seite des Flash-Speichers (4024) eine gültige Information enthält und eine Reserveseite keine gültige Information enthält; nach dem Kopierschritt wird die aktualisierte Bildseite zurück in den Flash-Speicher (4024) in eine Reserveseite geschrieben, wie sie durch die Hauptaufzeichnungstabelle (122) identifiziert ist; und
die Hauptaufzeichnungstabelle (122) wird aktualisiert, um so die Seite als eine Reserveseite zu identifizieren, die in den RAM-Speicher (4022) kopiert wurde, wenn die aktualisierte Bildseite zurück in den Flash-Speicher (4024) geschrieben worden ist.

10. Verfahren nach Anspruch 9, das weiter Folgendes umfasst:
ein Fehlerdetektionsabschnitt (125) wird in der Hauptaufzeichnungstabelle (122) aufgenommen bzw. ist darin enthalten; eine Sicherungsaufzeichnungstabelle (123) wird bereitgestellt, in die die Hauptaufzeichnungstabelle (122) kopiert wird, unmittelbar nachdem sie aktualisiert worden ist; und die Hauptaufzeichnungstabelle (122) wird nach einem Fehler überprüft, wenn sie verwendet wird, um auf den Flash-Speicher (4024) zuzugreifen, und die Sicherungsaufzeichnungstabelle (123) wird verwendet, falls die Haupaufzeichnungstabelle (122) einen Fehler hat.

11. Verfahren nach Anspruch 10, bei welchem der Fehlerdetektionsabschnitt (125) als ein CRC-Abschnitt berechnet wird.

12. Verfahren nach Anspruch 10 oder 11, bei welchem die Hauptaufzeichungstabelle (122) nach Gültigkeit überprüft wird, bevor die Seite des Flash-Speichers (4024) als eine Bildseite in den RAM-Speicher (4022) kopiert wird.

13. Verfahren nach Anspruch 12, bei welchem die Hauptaufzeichungstabelle (122) in die Sicherungsaufzeichnungstabelle kopiert wird, und zwar unmittelbar nach dem Überprüfen der Hauptaufzeichnungstabelle (122) nach Gültigkeit.

14. Verfahren nach Anspruch 13, bei welchem die Sicherungsaufzeichnungstabelle nach Gültigkeit überprüft wird, und zwar unmittelbar nachdem die Hauptaufzeichnungstabelle (122) darein kopiert worden ist.

15. Verfahren nach irgendeinem der Ansprüche 9 bis 14, bei welchem jede Seite eine Vielzahl von Datenblöcken umfasst und für jede Seite ein Satz von Blockgültigkeitsindikatoren (127-m) für die Datenblöcke in der entsprechenden Seite in der Hauptaufzeichnungstabelle (122) enthalten ist.

16. Verfahren nach Anspruch 15, bei welchem eine Identifikationsinformation (132) für die Blöcke in einer Seite in der Seite enthalten ist.

17. Verfahren nach Anspruch 16, bei welchem die Identifikationsinformation (132) für jeden Block in jenem Block enthalten ist.

18. Verfahren nach irgendeinem der Ansprüche 15 bis 17, bei welchem die gültigen Datenblöcke in der Bildseite neu angeordnet werden, um ungenutzte Räume dazwischen zu eliminieren.

19. Verfahren nach irgendeinem der Ansprüche 9 bis 18, bei welchem die Hauptaufzeichnungstabelle (122) in einem EEPROM gespeichert ist.

20. Verfahren nach irgendeinem der Ansprüche 9 bis 19, bei welchem ein Abschnitt (126), der eine Reserveseite identifiziert, und ein Abschnitt (127), der aus einer Sequenz von Unteraufzeichnungen besteht, die sich jeweils auf eine jeweilige gültige Seite beziehen, in der Hauptaufzeichnungstabelle (122) enthalten sind.

21. Empfänger/Dekoder (2020) zur Verwendung in einem digitalen Sende- und Empfangssystem, der ein Speichersystem nach irgendeinem der Ansprüche 1 bis 8 enthält.

22. Empfänger/Dekoder nach Anspruch 21, der weiter Folgendes umfasst:
ein Mittel (2018) zum Empfangen eines komprimierten MPEG-Typ-Signals;
ein Mittel zum Dekodieren des empfangenen Signals, um ein Fernseh- und/oder Radiosignal bereitzustellen; und
ein Mittel, um das Signal zu einem Fernseher und/oder Radio zuzuführen.

## Revendications

1. Système formant mémoire faisant partie d'un ordinateur et comprenant :
une mémoire flash (4024) qui est divisée en pages séparément inscriptibles (P1 à P8) ;
une mémoire RAM (mémoire à accès direct) (4022) ; et
des moyens (120) de copie d'une page de la mémoire flash sous forme de page image dans la mémoire RAM et de mise à jour de la page image ;
**caractérisé en ce qu'**il comporte de plus :
une mémoire non volatile séparée (4026) servant à contenir un tableau d'enregistrement principal (122) identifiant les pages valides et au moins une page de rechange dans la mémoire flash (4024), une page valide de la mémoire flash contenant des informations valides et une page de rechange ne contenant aucune information valide ;
des moyens (120) de réécriture, dans la mémoire flash (4024), de la page image mise à jour, et ce, sous forme de page de rechange identifiée par le tableau d'enregistrement principal (122) ; et
des moyens (120) de mise à jour du tableau d'enregistrement principal (122) contenu dans la mémoire non volatile (4026) de manière à identifier ladite page qui a été copiée dans la mémoire RAM (4022) en tant que page de rechange lorsque la page image mise à jour a été réécrite dans la mémoire flash (4024).

2. Système formant mémoire selon la revendication 1, dans lequel : le tableau d'enregistrement principal (122) comporte une zone de détection d'erreur (125) ; et dans lequel il est prévu : un tableau d'enregistrement de secours (123) au sein duquel le tableau d'enregistrement principal (122) est copié immédiatement après qu'il a été mis à jour ; ainsi que des moyens (120) de recherche d'erreurs éventuelles dans le tableau d'enregistrement principal (122) lors de son utilisation pour accéder à la mémoire flash (4024), et d'utilisation du tableau d'enregistrement de secours (123) si le tableau d'enregistrement principal (122) présente une erreur.

3. Système formant mémoire selon la revendication 2, dans lequel la zone de détection d'erreur (125) est une zone CRC (zone de contrôle de redondance cyclique).

4. Système formant mémoire selon l'une quelconque des revendications précédentes, dans lequel chaque page comprend une pluralité de blocs de données et dans lequel le tableau d'enregistrement (122) comporte, pour chaque page, un ensemble d'indicateurs de validité de bloc (127-m) relatifs aux blocs de données de la page correspondante.

5. Système formant mémoire selon la revendication 4, dans lequel les informations d'identification (132) des blocs d'une page sont incluses dans la page.

6. Système formant mémoire selon la revendication 5, dans lequel les informations d'identification (132) de chaque bloc sont incluses dans ce bloc.

7. Système formant mémoire selon l'une quelconque des revendications précédentes, dans lequel ladite mémoire non volatile séparée (4026) est une mémoire EEPROM.

8. Système formant mémoire selon l'une quelconque des revendications précédentes, dans lequel le tableau d'enregistrement principal (122) comporte une zone (126) identifiant une page de rechange et une zone (127) consistant en une suite de sous-enregistrements, chacun relatif à une page valide respective.

9. Procédé, dans un système formant mémoire comprenant une mémoire flash (4024) et une mémoire RAM (4022), de mise à jour de la mémoire flash (4024) divisée en pages séparément inscriptibles (P1 à P8), comprenant l'étape de copie d'une page de la mémoire flash (4024) en tant que page image dans une mémoire RAM (4022) et de mise à jour de la page image ; **caractérisé en ce qu'**il comprend, de plus, les étapes suivantes :
réalisation d'un tableau d'enregistrement principal (122) contenu dans la mémoire non volatile séparée (4026), identification des pages valides et d'au moins une page de rechange dans la mémoire flash (4024), une page valide de la mémoire flash (4024) contenant des informations valides et une page de rechange ne contenant aucune information valide ;
après l'étape de duplication, réécriture, dans la mémoire flash (4024), de la page image mise à jour, et ce, sous forme de page de rechange identifiée par le tableau d'enregistrement principal (122) ; et
mise à jour du tableau d'enregistrement principal (122) afin d'identifier ladite page qui a été copiée dans la mémoire RAM (4022) en tant que page de rechange lorsque la page image mise à jour a été réécrite dans la mémoire flash (4024).

10. Procédé selon la revendication 9 comprenant : l'inclusion d'une zone de détection d'erreur (125) dans le tableau d'enregistrement principal (122) ; la réalisation d'un tableau d'enregistrement de secours (123) dans lequel le tableau d'enregistrement principal (122) est copié immédiatement après qu'il a été mis à jour ; et la recherche d'erreurs éventuelles dans le tableau d'enregistrement principal (122) lors de son utilisation pour accéder à la mémoire flash (4024), et utilisation du tableau d'enregistrement de secours (123) si le tableau d'enregistrement principal (122) présente une erreur.

11. Procédé selon la revendication 10, dans lequel la zone de détection d'erreur (125) est conçue sous forme de zone CRC.

12. Procédé selon la revendication 10 ou 11, dans lequel la validité du tableau d'enregistrement principal (122) est vérifiée avant la copie de la page de la mémoire flash (4024) sous forme de page image dans la mémoire RAM (4022).

13. Procédé selon la revendication 12, dans lequel le tableau d'enregistrement principal (122) est copié dans le tableau d'enregistrement de secours immédiatement après la vérification de la validité du tableau d'enregistrement principal (122).

14. Procédé selon la revendication 13, dans lequel la validité du tableau d'enregistrement de secours est vérifiée immédiatement après que le tableau d'enregistrement principal (122) y a été copié.

15. Procédé selon l'une quelconque des revendications 9 à 14, dans lequel chaque page comprend une pluralité de blocs de données et dans lequel, pour chaque page, un ensemble d'indicateurs de validité de bloc (127-m) relatifs aux blocs de données de la page correspondante sont inclus dans le tableau d'enregistrement principal (122).

16. Procédé selon la revendication 15, dans lequel les informations d'identification (132) des blocs d'une page sont incluses dans la page.

17. Procédé selon la revendication 16, dans lequel les informations d'identification (132) de chaque bloc sont incluses dans ce bloc.

18. Procédé selon l'une quelconque des revendications 15 à 17, dans lequel les blocs de données valides de la page image sont réorganisés pour éliminer les espaces inutilisés entre ces derniers.

19. Procédé selon l'une quelconque des revendications 9 à 18, dans lequel le tableau d'enregistrement principal (122) est enregistré dans une mémoire EEPROM.

20. Procédé selon l'une quelconque des revendications 9 à 19, dans lequel une zone (126) identifiant une page de rechange et une zone (127) consistant en une suite de sous-enregistrements, chacun de ceux-ci étant relatif à une page valide respective, sont incluses dans le tableau d'enregistrement principal (122).

21. Récepteur/décodeur (2020) destiné à être utilisé dans un système d'émission-réception numérique comportant un système formant mémoire selon l'une quelconque des revendications 1 à 8.

22. Récepteur/décodeur selon la revendication 21 comportant, de plus :
des moyens (2018) de réception d'un signal comprimé de type MPEG ;
des moyens de décodage du signal reçu en vue de fournir un signal de télévision et/ou de radio ; et
des moyens de fourniture du signal à un téléviseur et/ou à une radio.
